# EUROPEAN PATENT SPECIFICATION

(11) **EP 0 897 412 B1**
(45) Date of publication and mention of the grant of the patent: **17.12.2003**
(21) Application number: 97919598.9
(22) Date of filing: 09.05.1997
(51) Int. Cl.: C08K 5/3435, C08L 77/00

(54) **IMPROVEMENTS IN OR RELATING TO ORGANIC POLYAMIDE COMPOUNDS**
VERBESSERUNGEN IM -ODER IN BEZUG AUF ORGANISCHE POLYAMIDZUSAMMENSETZUNGEN
AMELIORATIONS APPORTEES A DES COMPOSES POLYAMIDES ORGANIQUES

(30) Priority: 10.05.1996 GB 9609742
(43) Date of publication of application: 24.02.1999
(73) Proprietor: Clariant Finance (BVI) Limited, Road Town, Tortola (VG)
(72) Inventor: KAUL, Bansi, Lal, CH-4105 Biel-Benken (CH)
(74) Representative: D'haemer, Jan Constant
(86) International application number: IB9700533
(87) International publication number: WO97043335

(56) References cited:
- EP-A- 0 379 470
- JP-A- 9 041 217
- PATENT ABSTRACTS OF JAPAN vol. 095, no. 005, 30 June 1995 & JP 07 033738 A (MITSUBISHI KASEI CORP), 3 February 1995,

## Description

This invention relates to a process of increasing the heat stability, light stability, chemical stability and dyeability of synthetic polyamides as well as the stability and the light resistance of the colorants in dyed or pigmented synthetic polyamides. The invention also provides a process of improved dyeing or mass coloration of synthetic polyamides. The invention also relates to a stabilizer masterbatch composition as well as to modified polyamides obtainable by an afore-mentioned process.

Synthetic polyamides are in general worked, in particular during spinning processes, at temperatures of the order of 270°C or above. At these temperatures there are problems with the heat stability of synthetic polyamides. This can have serious consequences if, during spinning of synthetic polyamide, the through-put of the polymer is disrupted such that the polymer is exposed to the high temperatures of the spinning apparatus for longer periods than would be expected under normal running of the apparatus. Under such circumstances, there is an increasing likelihood of the synthetic polyamide thermally degrading. Further deficiencies of polyamides are their poor light stability, their poor melt processing stability due to their susceptibility to oxidation, their poor thermal-aging and oxidative chemical stability as well as their highly reducing polymer melts, limiting the suitability of colorants and additives, particularly in melt processing. Photodegradation is sometimes further accentuated in the case of colored materials due to the damage caused to the substrates in the dyeing processes and/or the phototendering influence of certain dyes.

It is the object of the present invention to provide a unique stabilizer specially tailored for use in polyamides to overcome the above-mentioned short-comings.

This object is achieved with a multifunctional compound as hereinunder defined containing groups bearing stearically hindered nitrogen atoms. It imparts photo and oxidative thermal/chemical stabilities to the substrates and the colorants applied thereto. It also enhances the dye affinity for pre-metallized as well as metal-free acid dyes.

The invention provides in one of its aspects a method of increasing the heat-stability, light stability, chemical stability and dye affinity of synthetic polyamide and in particular pigmented and/or filled synthetic polyamide by mixing, e.g. by incorporating before or during processing, therewith an effective amount of an additive according to the formula (I) 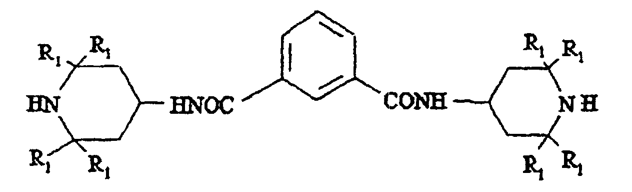 wherein R₁ represents a methyl group.

By adding an effective amount of the additive hereinabove described to synthetic polyamide one is able to increase the heat-stability, light stability, chemical stability and dye affinity of the polymer as well as the stability and the light resistance of the coloring agent in the dyed or pigmented polyamide without affecting certain desirable physical characteristics of the polymer, for example the relative viscosity and the degree of polymerization. Furthermore, the synthetic polyamide exhibits a decreased tendency to yellow and has improved stretchability and tensile strength.

The invention provides in another one of its aspects a method of improving the coloring of synthetic polyamides in the mass by mixing together a synthetic polyamide, a suitable dyestuff or pigment and an additive according to formula (I) as defined above.

The additive according to formula (I) may be present in the synthetic polyamide in amounts of from 0.1 to 5.0%, preferably 0.1 to 2.0% by weight based on the total weight of the heat-stabilized synthetic polyamide.

The polyamide to be stabilized can be a homopolyamide, a copolyamide, a mixture or blend of polyamides or of a polyamide and another polymer.

Preference is given to homopolyamides and/or copolyamides made from ω-aminocaproic acid, ω-aminoenanthoic acid, ω-aminocaprylic acid, ω-aminopelargonic acid, ω-aminocapric acid, ω-aminoundecanoic acid, ω-aminolauric acid, caprolactam, lactam-7, lactam-8, lactam-9, lactam-10, lactam-11 and/or laurolactam.

The polyamides to be stabilized can also be selected from the group of polyamides made, for example from dimethylenediamine, trimethylenediamine, tetramethylenediamine, pentamethylenediamine, hexamethylenediamine, polyetherdiamine and mixtures thereof on the one hand, and oxalic acid, malonic acid, succinic acid, glutaric acid, adipic acid, pimelic acid, suberic acid, azelaic acid, sebacic acid, nonedicarboxylic acid, decanedicarboxylic acid, undecanedioic acid, dodecanedioic acid, dimerised fatty acids and mixtures thereof on the other hand.

The preparation of the synthetic polyamides stabilized according to the invention can be effected by conventional means, preferably by mixing the additive of formula (I) with molten synthetic polyamide in a suitable receptacle, for example in an extruder prior to molding or spinning or before or during the polycondensation process of the synthetic polyamide itself.

Synthetic polyamides used in the invention are preferably dyed or pigmented, for example by topical application or by application in the melt in accordance with conventional methodology. Any type of dyestuff or pigment is suitable provided that it is stable at the high temperatures encountered in the melt. Preferred dyestuffs are monoazo complexes, in particular, the chromium complexes that are sufficiently stable at the high working temperatures encountered in, e.g. a spinning process. Preferred reactive dyestuffs are those halogen-containing triazinyl or vinyl group-containing metallized azo dyestuffs, in particular, those metallized with chromium, nickel or copper. Preferred pigments are, for example Pigment Yellow 192, Pigment Orange 68 and Pigment Red 149. Preferred polymer soluble dyes are for example Solvent Red 179.

If dyestuffs or pigments are employed in the synthetic polyamides they are preferably employed in amounts of from 0.1 to 10 parts, more preferably, 0.1 to 4 parts per 100 parts of the synthetic polyamide.

Synthetic polyamides may additionally comprise fillers or fibres, for example glass spheres or glass fibres, and/or delusterants, for example titanium dioxide which may be present in proportions of from 0.1 to 5 parts, more preferably 0.2 to 2.0 parts, e.g. 0.2 parts per 100 parts of polyamide.

The invention provides in another one of its aspects a stabilizer masterbatch composition which is transparent. Stabilizer masterbatch compositions according to the invention comprise 10 to 80% by weight, preferably 5 to 50% by weight, more preferably 15 to 40% by weight of the compound of formula (I) and 90 to 20% by weight, preferably 95 to 50% by weight, more preferably 85 to 60% by weight of a thermoplastic carrier polymer which is identical to or compatible with the polyamide to be stabilized.

A masterbatch composition may comprise in addition to the additive according to the invention a coloring agent. In this case such compositions comprise 2.5 to 40% by weight, preferably 5 to 25% by weight of the compound of formula (I), 5 to 40% by weight, preferably 7.5 to 20% by weight of a suitable dye or pigment and 95 to 50% by weight, preferably 85 to 60% by weight of the afore-mentioned carrier polymer.

The invention provides in a further one of its aspects a modified synthetic polyamide obtainable by the process hereinabove defined which polyamide having improved heat stability, light stability, chemical stability and dye affinity and in the case of a dyed or pigmented polyamide also having improved light resistance and stability of the colorant in said polyamide.

There now follow examples which are illustrative of the invention.

In the following examples all parts and percentages are by weight and all temperatures are given in degrees Celsius.

### EXAMPLES

### I. Production of the yarn

Polyamide 6 (BASF, type BS 703) or polyamide 6.6 chips (BASF, type AS 2503) are dried in a vacuum tumble drier for 8 hours at a temperature of 110° or 125°. 2 kg batches of the dried polymer are combined and milled for one hour with an appropriate amount of a compound of the formula (I) [which is used directly without any further drying as it is delivered predried] to form 0.5% or 1.0% mixtures of the compound in polymer. Filament yams are melt-spun from the afore-mentioned mixtures under conditions as summarized in table 1 using the following equipment: An extruder fitted with one dynamic mixer at the top of the 30mm-screw and two static mixers before the spinning head. For winding of the filament yams consisting of 32 filaments a BARMAG SW46 winder is used together with two godets. The as-spun yams are drawn subsequently on an DIENES draw-twisting machine to reach a residual elongation of ± 25%. The applied drawing ratios are given in table 2.

### II. Test methods

For analytical characterization of as-spun and drawn yams different physical and chemical methods are applied:
- tenacity/elongation/initial modulus
- sonic modulus
- uster unevenness
- solution viscosity.

### a) Mechanical properties

The mechanical properties are determined with the Statimat M from TEXTECHNO, the fiber mass fluctuation is measured with the Uster Tester III form ZELLWEGER Uster and the sonic modulus is calculated from the results of determination of sound velocity measured with the Dynamic Modulus Tester PPM-5R from MORGAN Co., Inc.

### b) Viscosity

The solution viscosity is determined with an Ubbelohde type viscometer and the viscosity values are given as reduced specific viscosity.

### c) Light stability

Light fastness tests are carried out on a Xenotest where the drawn fibers are reeled around the metal frames, fixed on an carousel and exposed to light for 50, 100 and 200 hours in total. After these periods of time tenacity and initial modulus are measured again and compared to the corresponding sample, which has not been exposed to light.

### d) Dyeing and color matching

The drawn yams formed according to the process described above are knitted on a round knitting machine from LUCAS to provide test samples for dyeing. In case of processing those as-spun yams of 50 dtex, two threads were combined before knitting to reach a comparably dense fabric as for the higher counts of 100 dtex. The knitted stockings are heat set on a pad-steam device at a temperature of 100° and 95% relative humidity for a period of 20 minutes. Thereafter test samples are dyed on a MATHIS Labor JET with NYLOSAN Dyes (CLAMANT) using two different kind of dyestuff.

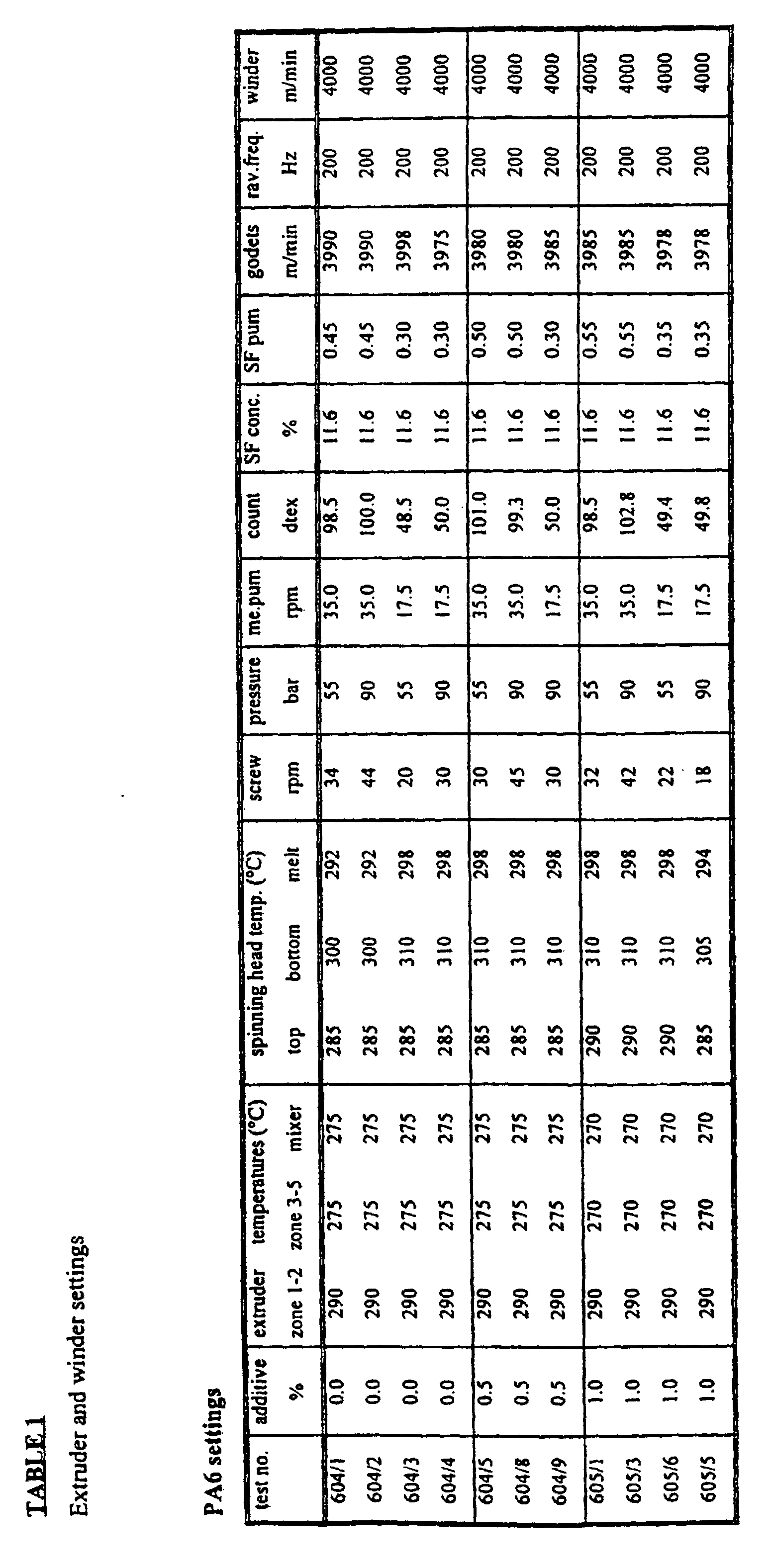

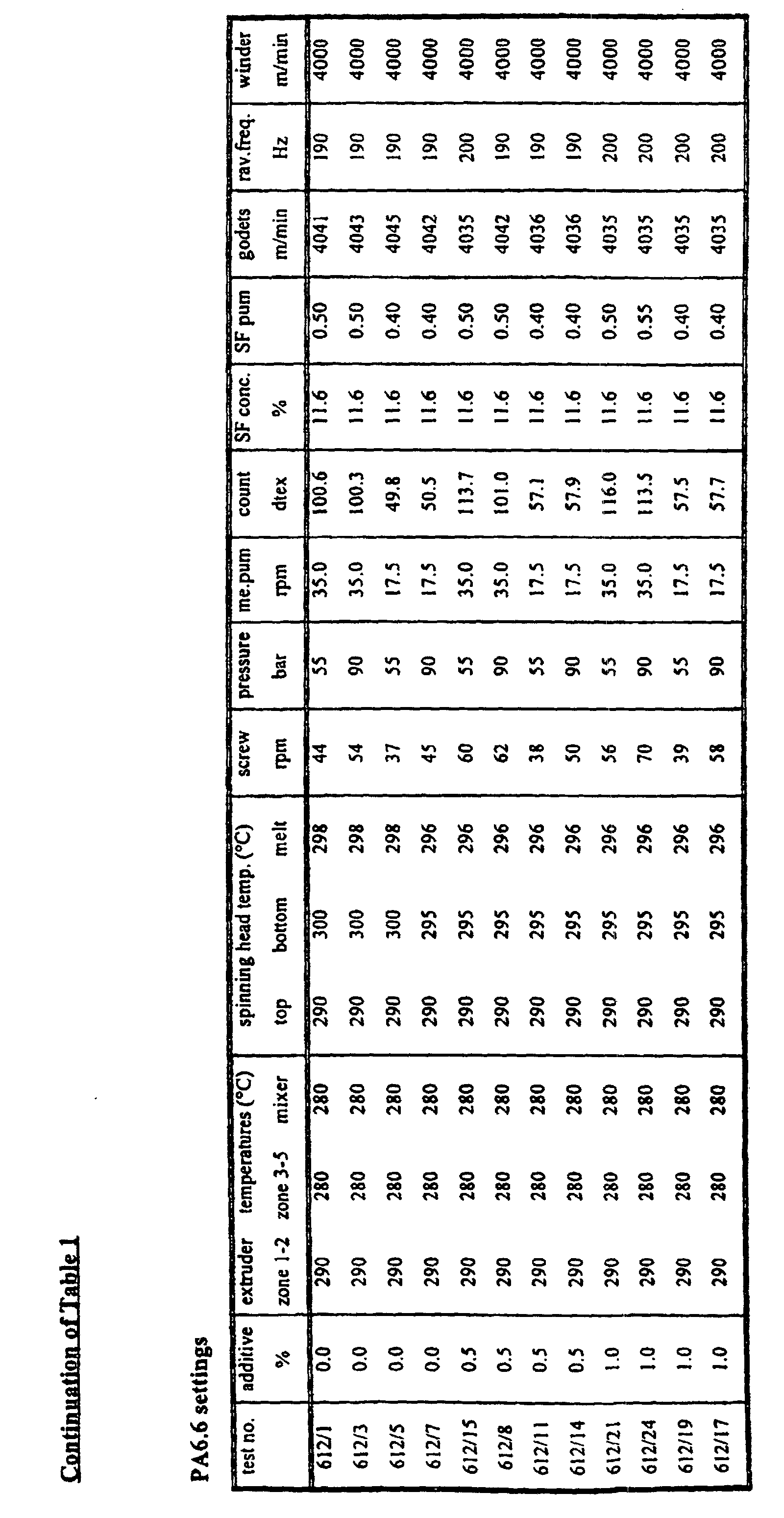

| **Type I** | **Type II** |
|---|---|
| (dyeable from weak acidic system) | (dyeable from about neutral dyeing liquor) |
| - Nylosan Yellow F-L | - Nylosan Red F-2BLN250 |
| - Nylosan Red F-GL | - Nylosan Blue NFL 180 |
| - Nylosan Blue F-L 150 | - Nylosan Brilliant Green F-6GLN |
| - Nylosan Green F-BL 130 | - Nylosan Red EBLN - Nylosan Blue N-5GL200 |

according to the following method: A test sample is placed in a dyebath at 20° having a liquor ratio of 1:40 and consisting of 2% dyestuff, 0.5% Lyogen PAM and a sodium acetate/acetic acid buffer (pH 4.5) for dyes of the type I and a phosphate buffer (pH 6) for dyes of type II. The temperature is increased to 98° over a period of 45 minutes and the temperature maintained for a further 60 minutes. Thereafter, the temperature is reduced to 80° before flushing the dyes sample with cold water. The dyed samples are characterized by means of color matching with a Chroma-Meter CR 310 (MINOLTA) providing the CIELab values, which can be converted to ΔE, ΔL, ΔC and ΔH according to the definitions given in the German standard DIN 6174. As basic for calculation of the Δ-values the correspondingly produced samples without the additive according to the invention are used as reference sample.

For reasons of comparison not only in relation to an unmodified polymer produced under the same conditions, also a commercial PA6- and PA6.6-fabric, respectively, is dyed and measured accordingly.

### e) Oxidative chemical stability tests

To determine the influence of the additive according to the invention on the oxidative chemical stability of fibers, nylon fibers are also exposed to the peroxide soda boil bleaching conditions. Such treatments are a common practice to obtain a whiter yarn and/or during the cleaning of the materials in their life cycle.

### f) Oxidative thermal stability tests

To determine the oxidative thermal stability, the fibers are subjected to oven test in air for one hour at 180°, 190° and 200°, and the changes in color and physical properties (relative viscosity, tenacity, modulus & elongation) are measured.

### II. Test results

### 1. Spinnability

The spinnability of the polymers modified with the additive according to the invention is very good which is reflected in very stable pressure conditions in the extruder, a smooth fiber formation and a good package build up without fluffs.

### 2. Mechanical properties

The test results are summarized in table 2.

The mechanical properties of the as-spun yarns are quite comparable to the reference yams and especially for the PA6.6 polymers modified according to the invention in most cases even are markedly improved. In general for both polymers there is a tendency towards higher figures for tenacity, initial and sonic modulus with increasingly higher amounts of additive and decreased fiber count, respectively, while the variation of extruder pressure as expected has no significant effect on mechanical fiber properties. It is well known that reducing the filament count (dpf) under constant spinning conditions is due to higher degree of orientation during fiber formation, so that tenacity and muduli are improved.

Considering the drawn fibers these tendencies are still more pronounced compared to as-spun fibers. Again the fibers modified according to the invention show a remarkable increase in tenacity caused by the addition of 1 % of the additive. For the modified PA6 fibers an increase of about 10% has to be stated, whereas in case of the modified PA6.6 fibers this increase is even more than 10% of the tenacity of the not modified reference yarn.

As a general conclusion it can be stated that the addition of the additive of formula (I) according to the invention to polymers improves the fiber mechanical properties.

### 3) Light stability

The test results are summarized in table 3a to 3d.

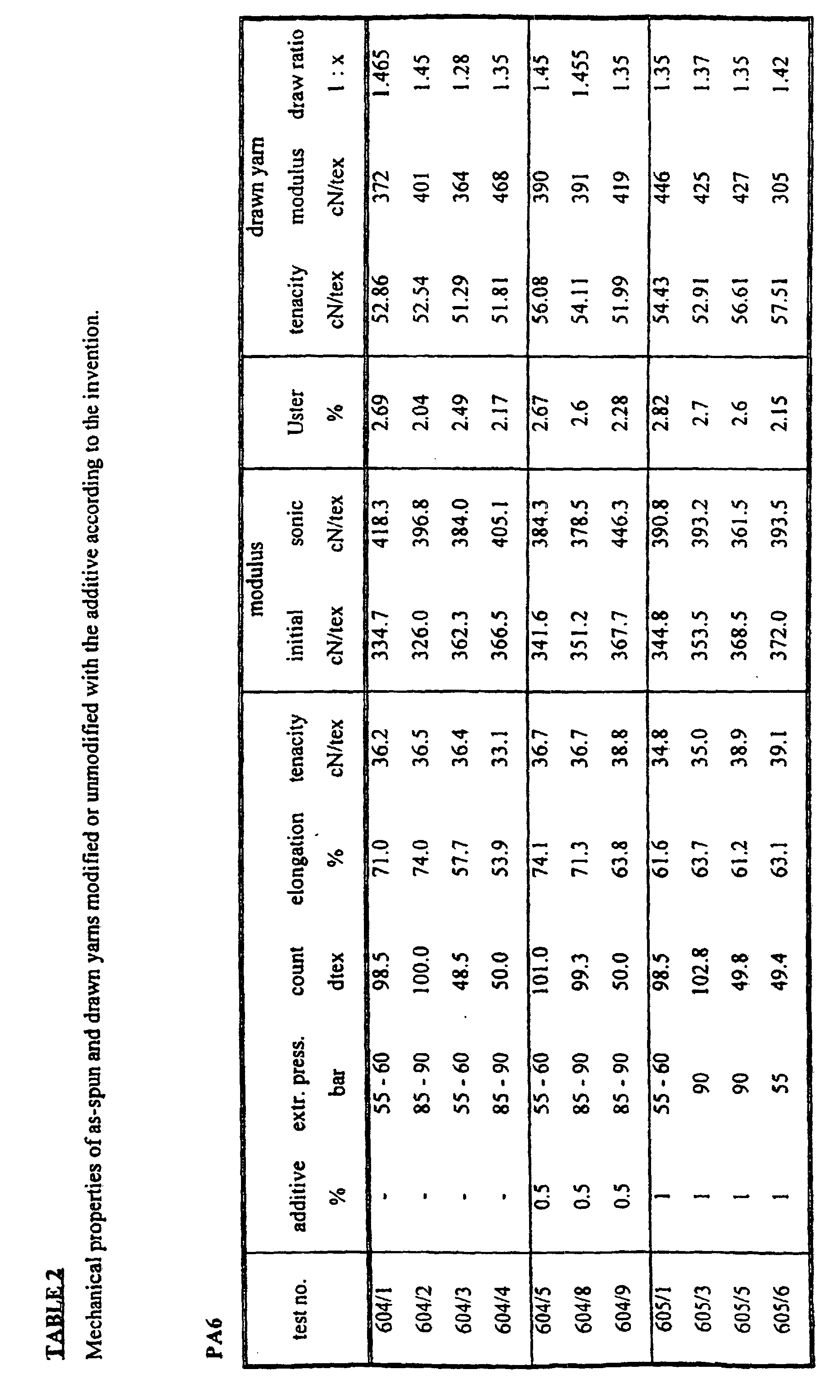

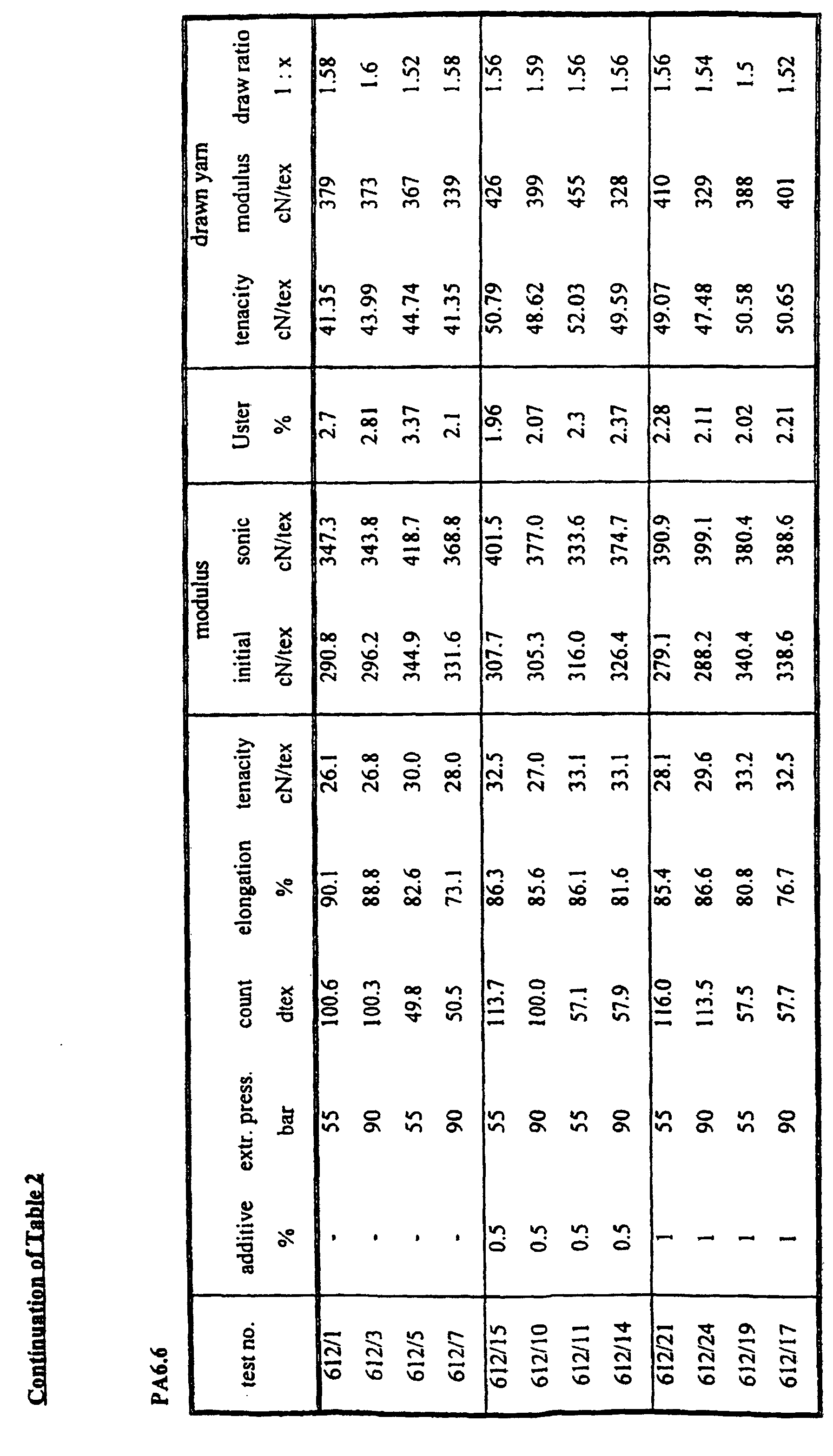

**TABLE 3a - 3d**

| Tenacity and initial modulus of PA6 and PA6.6 fibers modified or unmodified with the additive according to the invention after exposure to light | | | | |
|---|---|---|---|---|
| **a) Tenacity (cN/tex) of PA6 fibers, extruder pressure 50 bar** | | | | |
| time (h) | 0 | 50 | 100 | 200 |
| 0%, 50dtex | 51.3 | 48.6 | 45.8 | 38.4 |
| 0%, 100dtex | 52.9 | 49.6 | 49.6 | 48.6 |
| 0.5%, 50dtex | - | - | - | - |
| 0.5%, 100dtex | 56.7 | 56.1 | 55.7 | 49.6 |
| 1%, 50dtex | 57.5 | 49.6 | 56.4 | 47.9 |
| 1%, 100dtex | 54.4 | 56.2 | 56.5 | 51.7 |

| **b) Initial modulus (cN/tex) of PA6 fibers, extruder pressure 50 bar** | | | | |
|---|---|---|---|---|
| time (h) | 0 | 50 | 100 | 200 |
| 0%, 50dtex | 364 | 422 | 511 | 540 |
| 0%, 100dtex | 372 | 489 | 500 | 497 |
| 0.5%, 50dtex | - | - | - | - |
| 0.5%, 100dtex | 390 | 508 | 549 | 563 |
| 1%, 50dtex | 305 | 496 | 586 | 587 |
| 1%, 100dtex | 446 | 558 | 587 | 583 |

| **c) Tenacity (cN/tex) of PA6.6 fibers, extruder pressure 50 bar** | | | | |
|---|---|---|---|---|
| time (h) | 0 | 50 | 100 | 200 |
| 0%, 50dtex | 44.7 | 44.6 | 42.1 | 36.4 |
| 0%, 100dtex | 41.4 | 40.3 | 39.4 | 34.5 |
| 0.5%, 50dtex | 52.1 | 47.8 | 49.4 | 43.1 |
| 0.5%, 100dtex | 50.8 | 49.7 | 49.2 | 47.5 |
| 1%, 50dtex | 50.6 | 48.1 | 48.1 | 45.4 |
| 1%, 100dtex | 49.1 | 45.6 | 45.4 | 41.4 |

| **d) Initial modulus (cN/tex) of PA6.6 fibers, extruder pressure 50 bar** | | | | |
|---|---|---|---|---|
| time (h) 0%, | 0 | 50 | 100 | 200 |
| 50dtex | 367 | 449 | 483 | 506 |
| 0%, 100dtex | 379 | 366 | 479 | 489 |
| 0.5%, 50dtex | 455 | 519 | 550 | 503 |
| 0.5%, 100dtex | 426 | 484 | 554 | 580 |
| 1%, 50dtex | 388 | 483 | 525 | 550 |
| 1%, 100dtex | 410 | 433 | 499 | 506 |

For all modified samples, light fastness is improved. Both measured parameters exhibit higher values for the modified samples. That means, the level of light fastness is shifted about 10 - 20% towards higher tenacity or initial modulus by the addition of the additive according to the invention. Furthermore, a higher percentage of the additive leads to higher values of mechanical data. In the same way tenacity and modulus are influenced by the filament count, as the 100 dtex fibers always show higher values than the lower count fibers.

In general, the addition of the additive according to the invention to polymers improves the light fastness with respect to the fiber-mechanical properties.

### 4. Oxidative chemical stability

The results of the influence of the additive according to the invention on the chemical degradation of PA6.6 fibres are summarized in table 4.

**TABLE 4**

| Normalized Tenacity of PA6.6 fibers modified or unmodified with the additive according to the invention before and after exposure to peroxide soda boil bleaching conditions | | |
|---|---|---|
| **Normalised tenacity (cN/tex) of PA6.6 fibers (50dtex), extruder pressure 50bars.** | | |
| **Additive (%)** | **Non-Bleached** | **Bleached** |
| **0.0** | **94.7** | **49.8** |
| **0.5** | **100.0** | **75.6** |
| **1.0** | **100.0** | **78.0** |

Here again an improvement in the stability as a result of the incorporation of the additive according to the invention is observed.

### 5. Heat stability

The test results of the influence of the additive according to the invention on the thermal stability of PA6 and PA6.6 (100dtex-/55bars) fibres are summarized in table 5.

**TABLE 5a**

| Absorbance, normalised viscosity, normalised tenacity, modulus of PA6 fibers unmodified or modified with the additive according to the invention. | | |
|---|---|---|
| Treatment Temp. (°C) | Absorbance at 390 nm | |
| | 0% Additive | 0.5% Additive |
| 180 | 0.231 | 0.032 |
| 190 | 0.294 | 0.134 |
| 200 | 0.399 | 0.084 |

| Treatment Temp. (°C) | Normalised Viscosity (%) | |
|---|---|---|
| | 0% Additive | 0.5% Additive |
| 180 | 74.34 | 94.67 |
| 190 | 72.8 | 90.99 |
| 200 | 71.47 | 87.62 |

| Treatment Temp. (°C) | Normalised Tenacity (%) | |
|---|---|---|
| | 0% Additive | 0.5% Additive |
| 180 | 66.04 | 89.25 |
| 190 | 60.66 | 63.49 |
| 200 | 32.36 | 35.47 |

| Treatment Temp. (°C) | Modulus (%) | |
|---|---|---|
| | 0% Additive | 0.5% Additive |
| 180 | 87.19 | 109.64 |
| 190 | 79.71 | 103.8 |
| 200 | 66.57 | 86.46 |

**TABLE 5b**

| Absorbance, normalised viscosity, normalised tenacity and energy at break of PA6.6 fibers unmodified or modified with the additive according to the invention. | | | |
|---|---|---|---|
| Treatment Temp. (°C) | Absorbance at 390 nm | | |
| | 0% Additive | 0.5% Additive | 1% Additive |
| 180 | 0.3612 | 0.312 | 0.3054 |
| 190 | 0.4603 | 0.3463 | 0.339 |
| 200 | 0.6535 | 0.4242 | 0.4032 |

| Treatment Temp. (°C) | Normalised Viscosity (%) | | |
|---|---|---|---|
| | 0% Additive | 0.5% Additive | 1% Additive |
| 180 | 21.9 | 53.5 | 59.1 |
| 190 | 19.0 | 45.3 | 52.4 |
| 200 | 19.7 | 38.4 | 42.8 |

| Treatment Temp. (°C) | Normalised Tenacity (%) | | |
|---|---|---|---|
| | 0% Additive | 0.5% Additive | 1% Additive |
| 180 | 37.0 | 54.5 | 65.5 |
| 190 | 33.0 | 47.3 | 60.5 |
| 200 | 30.0 | 41.0 | 59.1 |

| Treatment Temp. (°C) | Energy at break (mJ) | | |
|---|---|---|---|
| | 0% Additive | 0.5% Additive | 1% Additive |
| 180 | 0.103 | 2.196 | 2.278 |
| 190 | 0.093 | 1.081 | 1.155 |
| 200 | 0.074 | 0.502 | 0.682 |

The protection granted to the fibers by the additive according to the invention versus unmodified fibers is very conspicuous both regarding discoloration and degradation of the mechanical properties.

### 6. Dyeability

The dyeing properties of the drawn fibers are determined using both pre-metallized and metal-free acid dyes. The improvements in overall properties are even more pronounced in the case of pre-metallized dyes. The results are summarized in table 6.

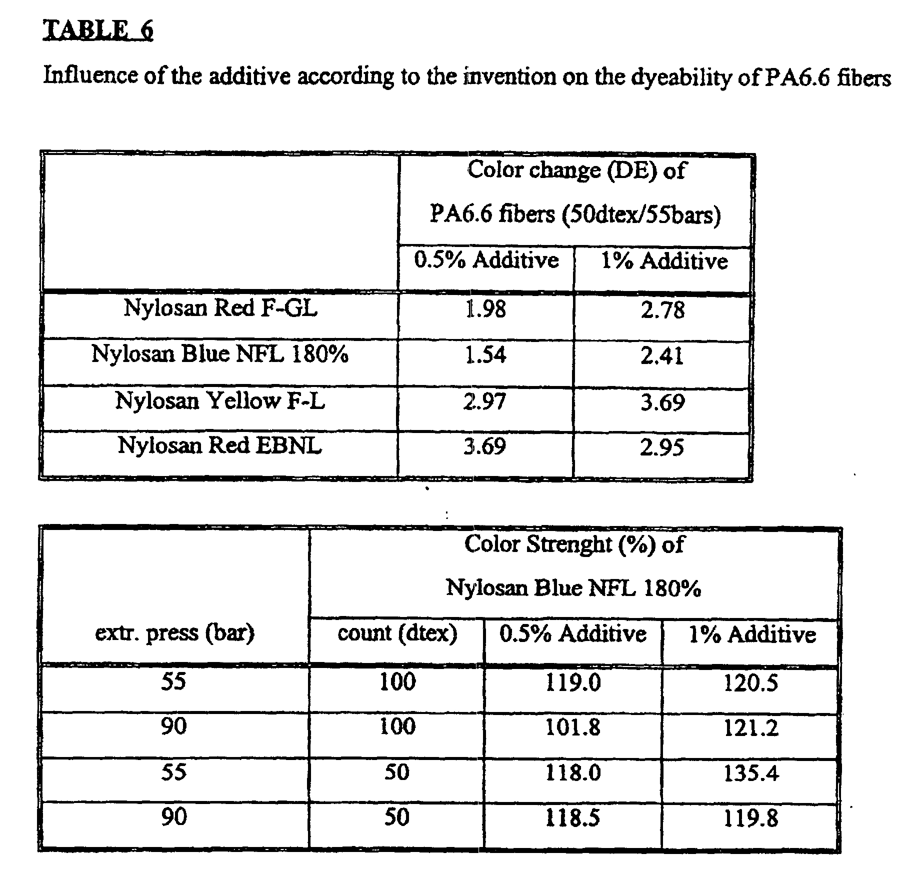

It can be seen that even in 2% dye concentration, the fibers show deeper and stronger shades with increasing amounts of the additive according to the invention.

Deeper and stronger shades with same amount of dye also mean better ecology in dye houses due to the less amount of dye in the effluent water.

The deeper dyeability imparted to the fibers by the application of the additive according to the invention is further confirmed by tests where the fibers are dyed for 24 hours to saturation limits and the dye uptake is determined by reextraction of the dyes with aqueous dimethyl formamide followed by optical density measurements. The test results are summarized in table 7.

**TABLE 7**

| Influence of the additive according to the invention on the dyeability of PA6 and PA6.6 fibers with the dye POLAR BLUE RAWL | | |
|---|---|---|
| **Concentration of Dye on Fibre (%)** | | |
| **Additive (%)** | **Nylon 6** | **Nylon 6.6** |
| **0.0** | **1.9** | **1.8** |
| **0.5** | **2.8** | **2.6** |
| **1.0** | **3.8** | **3.4** |

This experiment not only underlines the deeper dyeability of the fibers modified with the additive according to the invention, but also provides an evidence that the compound of formula (I) does not get extracted out of the fibers even after subjecting the corresponding fibers to extreme dyeing conditions.

### 7. Light fastness of the dyeings

In table 8 the results of the light fastness of the additive containing dyeings versus untreated dyeings are summarized. There is a dramatic improvement in the dye-light fastness.

**TABLE 8**

| Influence of the additive according to the invention on dye-light fastness of PA6.6 dyed fibers (100 dtex/55bars) | | | |
|---|---|---|---|
| **Blue Scale Note** | | | |
| **Additive (%)** | **Nylosan Blue NFL 180%** | **Nylosan Red EBNL** | **Nylosan Yellow F-L** |
| **0.0** | **5.5** | **3.5** | **5.0** |
| **0.5** | **6.5** | **6.0** | **6.0** |
| **1.0** | **7.0** | **7.0** | **7.0** |

The additive according to the invention is also tested in carpet fibers. In table 9 the results of the heat and light stability tests of carpet fibers modified with the compound of formula (I) are summarized.

**TABLE 9**

| Influence of the additive according to the invention on the thermal stability of PA6 carpet fibers (1200dtex). | | |
|---|---|---|
| Period of Heat Treatment at 135°C (min) | Yellowness Index (DIN 6167) | |
| | 0% Additive | 0.25% Additive |
| 0 | 2.3 | 2.1 |
| 30 | 7.6 | 6.7 |
| 80 | 10.6 | 7.7 |
| 120 | 12.3 | 9.2 |
| 180 | 16.6 | 12.1 |
| 240 | 17.5 | 13.6 |

| Treatment Temp. (°C) | Normalised Elongation (%) | |
|---|---|---|
| | 0% Additive | 0.5% Additive |
| 180 | 100.0 | 100.0 |
| 190 | 28.3 | 85.9 |
| 200 | 19.5 | 69.8 |

| Treatment Temp. (°C) | Normalised Tensile Strenght (%) | |
|---|---|---|
| | 0% Additive | 0.5% Additive |
| 180 | 100.0 | 100.0 |
| 190 | 33.3 | 86.9 |
| 200 | 22.3 | 78.0 |

In proof of advanced performance characteristics imparted to nylon fibers using the additive according to the invention PA6 carpet fibers of 1300 dtex/68 filaments are produced with and without the additive according to the invention. The resulting fibers are dyed in five trichromic shades. The dyeings are then exposed to four cycles of FAKRA. The fibers not containing any additive not only faded but also degraded. Even parts of the fibers not exposed to light but only to the heat in the FAKRA test also faded and are degraded. Whereas the fibers containing the additive according to the invention are almost unaltered and also show much deeper shades with same concentration of dyes in dyebaths.

The compound of formula (I) is also tested in nylon engineering polymers. The test results are summarized in table 10.

**TABLE 10**

| Influence of the additive according to the invention on the light stability of poly(ether-bloc-amide) plates after 1000 hours light exposure (CAM 7). | | |
|---|---|---|
| **Transparency (%)** | | |
| Additive | Before Exposure | After Exposure |
| No Additive | 89.4 | 1.5 |
| 0.2%Irganox 1098 | 89.8 | 2.2 |
| 0.6% Sanduvor 3944 | 89.9 | 22.1 |
| 0.6% Sanduvor PR31 | 89.8 | 48.6 |
| Additive according to formula I (R1 = Methyl) | 90.7 | 83.2 |
| 0.6% Sanduvor VSU | 90.0 | 2.7 |
| 0.3% Sanduvor VSU + 0.3% Sanduvor 3944 | 90.6 | 11.4 |
| 0.3% Sanduvor VSU + 0.3& Sanduvor PR31 | 90.7 | 33.5 |
| 0.3% Additive according to formula I (R₁ = Methyl) + 0.3% Sanduvor VSU | 89.3 | 77.9 |

As in fibers, the additive according to the invention also improves heat and light stability and retention of transparency on exposure to light.

In Table 10 the structural formulae of the additives are: 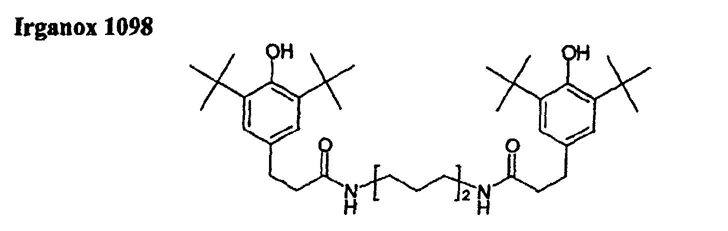 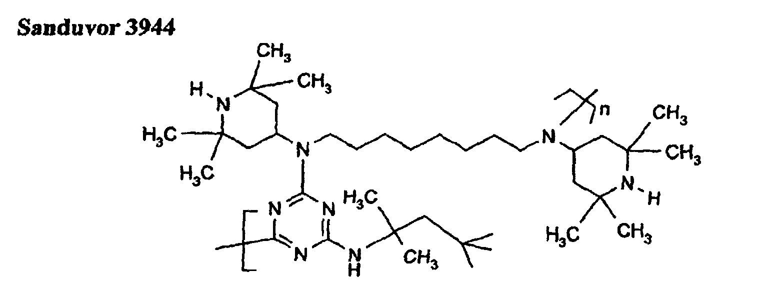 poly-{[6[1,1,3,3-tetramethylbutyl)-imino]-1,3,5-triazine-2,4-diyl][2-(2,2,6,6-tetramethyl-piperidyl)-amino]-hexamethylene-[4-(2,2,6,6-tetramethylpiperidyl)-imino]}; or condensation product of N,N'-(2,2,6,6-tetramethylpiperidyl)-hexamethylenediamine and 4-tert-octylamino-2,6-dichlaro-s-triazine 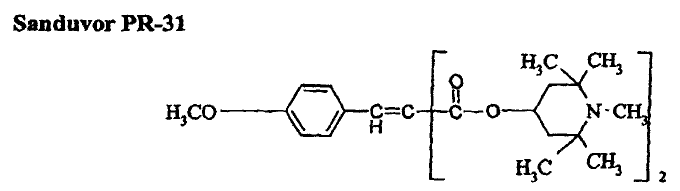 propanedioic acid,[(4-methoxyphenyl)-methylene]-,bis(1,2,6,6-pentamethyl-4-piperidinyl)ester

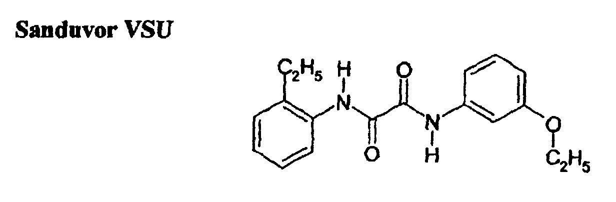

## Claims

1. A process of increasing the heat stability, light stability and chemical stability of synthetic polyamides comprising incorporating therein before or during processing an effective amount of a compound of formula (I) 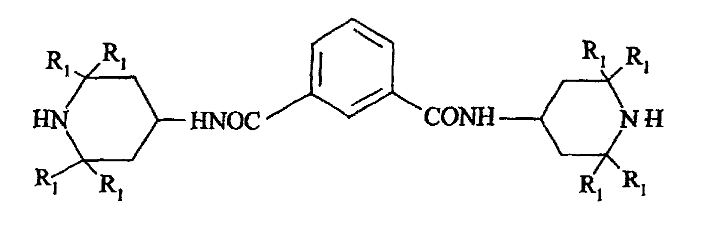 wherein R₁ represents a methyl group.

2. A process according to claim 1 wherein the compound of formula (I) is added in an amount of from 0.1 to 5.0 parts by weight per 100 parts by weight of the synthetic polyamide.

3. A process of increasing the heat stability, light stability and chemical stability of the coloring agents in dyed or pigmented synthetic polyamides by mixing together a synthetic polyamide, a suitable dyestuff or pigment as such or in the form of a colorant masterbatch composition and a compound of formula (I) as defined in claim 1.

4. A process according to claim 1 or claim 3 wherein the polyamide is a homopolyamide, a copolyamide, a mixture or blend of polyamides.

5. A stabilizer masterbatch composition which is transparent comprising a compound of formula (I) as defined in claim 1 and a carrier polymer which is identical to or compatible with the polyamide to be stabilized.

6. A stabilizer and colorant masterbatch composition comprising a compound of formula (I) as defined in claim 1, a coloring agent and a carrier polymer which is identical to or compatible with the polyamide to be stabilized.

7. A modified synthetic polyamide obtainable by a process according to claim 1 or claim 3 and any article manufactured therefrom.

8. The use of an additive according to the formula (I) as a heat, light, chemical and color stabilizer in a synthetic polyamide.

## Patentansprüche

1. Verfahren zur Erhöhung der Wärmebeständigkeit, der Lichtbeständigkeit und der chemischen Beständigkeit synthetischer Polyamide, umfassend den Einsatz einer wirksamen Menge einer Verbindung der Formel (I) vor oder während der Verarbeitung 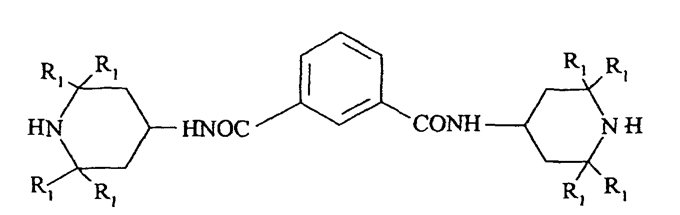 wobei R₁ eine Methylgruppe darstellt.

2. Verfahren nach Anspruch 1, wobei die Verbindung der Formel (I) in einer Höhe von 0,1 bis 5,0 Teilen nach Gewicht pro 100 Teilen nach Gewicht des synthetischen Polyamids zugesetzt ist.

3. Verfahren zur Erhöhung der Wärmebeständigkeit, der Lichtbeständigkeit und der chemischen Beständigkeit der Färbemittel in gefärbten oder pigmentierten synthetischen Polyamiden, indem ein synthetisches Polyamid, ein geeigneter Farbstoff oder Pigment als solche oder in Form einer Masterbatchzusammensetzung von Farbstoffen, und eine Verbindung der Formel (I), wie sie in Anspruch 1 definiert ist, vermischt werden.

4. Verfahren nach Anspruch 1 oder Anspruch 3, wobei das Polyamid ein Homopolyamid, ein Copolyamid, oder eine Mischung oder Gemisch von Polyamiden ist.

5. Zusammensetzung eines Stabilisatormasterbatches, die durchsichtig ist, umfassend eine Verbindung der Formel (I) nach Anspruch 1, und ein Trägerpolymer, das identisch oder kompatibel mit dem Polyamid ist, das stabilisiert werden soll.

6. Zusammensetzung eines Stabilisator- und Farbstoffmasterbatches, umfassend eine Verbindung der Formel (I) nach Anspruch 1, ein Färbemittel, und ein Trägerpolymer, das identisch oder kompatibel mit dem Polyamid ist, das stabilisiert werden soll.

7. Modifiziertes synthetisches Polyamid, das durch ein Verfahren nach Anspruch 1 oder Anspruch 3 und einem Produkt, das damit erzeugt wird, erreichbar ist.

8. Einsatz eines Zusatzstoffes gemäss Formel (I) als Wärme-, Licht-, Farb- und chemischer Stabilisator in einem synthetischen Polyamid.

## Revendications

1. Procédé d'augmentation de la stabilité thermique, de la stabilité à la lumière, et de la stabilité chimique des polyamides synthétiques, comprenant l'incorporation avant ou pendant le traitement d'une quantité efficace d'un composé de formule (I) 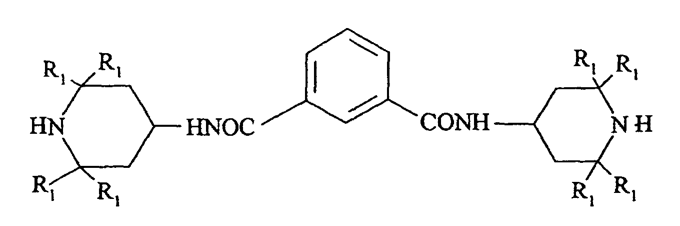 dans laquelle R₁ représente un groupe méthyle.

2. Procédé selon la revendication 1 dans lequel le composé de formule (I) est ajouté dans une proportion allant de 0,1 à 5,0 parties en poids pour 100 parties en poids du polyamide synthétique.

3. Procédé d'augmentation de la stabilité thermique, de la stabilité à la lumière et de la stabilité chimique des agents colorants dans des polyamides synthétiques teints ou pigmentés, en mélangeant ensemble un polyamide synthétique, un colorant ou pigment adapté tel quel ou sous forme d'une composition maître de colorant, et un composé de formule (I) comme défini dans la revendication 1.

4. Procédé selon la revendication 1 ou la revendication 3 dans lequel le polyamide est un homopolyamide, un copolyamide, une combinaison ou un mélange de polyamides.

5. Composition maître de stabilisateur qui est transparente comprenant un composé de formule (I) comme défini dans la revendication 1 et un polymère support qui est identique au polyamide à stabiliser ou compatible avec celui-ci.

6. Composition maître de colorant et stabilisateur comprenant un composé de formule (I) comme défini dans la revendication 1, un agent colorant et un polymère support qui est identique au polyamide à stabiliser ou compatible avec celui-ci.

7. Polyamide synthétique modifié susceptible d'être obtenu par un procédé selon la revendication 1 ou la revendication 3, et tout produit fabriqué à partir de celui-ci.

8. Utilisation d'un additif selon la formule (I) comme stabilisateur thermique, stabilisateur à la lumière, stabilisateur chimique et stabilisateur de couleur dans un polyamide synthétique.
